# EUROPEAN PATENT SPECIFICATION

(11) **EP 3 639 711 B1**
(45) Date of publication and mention of the grant of the patent: **01.12.2021**
(21) Application number: 19202758.9
(22) Date of filing: 11.10.2019
(51) Int. Cl.: A47J 36/24

(54) **CHAFING DISH**
WARMHALTEVORRICHTUNG
CHAUFFE-PLAT

(30) Priority: 16.10.2018 IT 201800009495
(43) Date of publication of application: 22.04.2020
(73) Proprietor: La Tavola S.r.l., 20122 Milano (IT)
(72) Inventor: SAMBONET, Sergio, 20145 MILANO (IT)
(74) Representative: Branca, Emanuela

(56) References cited:
- EP-A1- 2 654 533
- WO-A1-2016/008599
- US-A1- 2012 217 253
- Dallan Sanhe: "Multi-ply stainless steel sheet,cookware circle/disc/plate,aluminum circle cookware used", , 10 August 2017 (2017-08-10), XP055585543, Retrieved from the Internet: URL:https://web.archive.org/web/2017081018 5107/http://www.sanhekitchen.com/sale-9134 498-multi-ply-stainless-steel-sheet-cookwa re-circle-disc-plate-aluminum-circle-cookw are-used.html [retrieved on 2019-05-06]

## Description

The present invention relates to a chafing dish.

Various types of chafing dishes used in the hotel or catering sector in general are known aimed at heating or keeping warm food substances previously prepared and intended for consumption. For the correct maintenance of food the chafing dish comprises different elements for heat transmission. Known chafing dishes comprise a food tray, in which the food is placed, a water pan and a heat source in which the water pan is provided with a base for coupling to the heat source, side walls and an upper receiving opening of the food tray. The use of water in the water pan, described above, as an element of heat transmission allows the heating to be homogeneous and durable over time, a technique known with the term "bain-marie". However, this type of operation is not suitable for all possible foods intended for consumption which, in fact, due to the high humidity generated by the amount of water present in the water-holding water pan, can be excessively charged with humidity and therefore not corresponding to the quality required by consumers. It is known that this technique has been improved with the possibility of controlling humidity or in a low humidity environment, in order to be able to dispense foods with a taste and consistency corresponding to those required by consumers. Another known technique is dry heating, particularly suitable for some foods, which is usually carried out by direct contact of the heat source with the water pan and the food tray. For the different techniques it is possible to use different heat sources, the most common ones are heating plates with electric resistors, induction plates, burners powered by fuel gel or other heat sources compatible with this type of use, with the materials used for the realisation of the elements, in compliance with the current regulations.

Disadvantageously, it is necessary to have different types of chafing dishes for each different type of food as the technique for it to be heated or to be kept warm is different.

EP2654533A1 discloses a chafing dish comprising a water pan which has two areas for containing water which can be selectively filled, wherein said chafing dish allows, without removing or replacing any components, to selectively warm the dishes in bain-marie, in a controlled or in a low humidity environment.

The object of the present invention is to achieve a chafing dish adapted to allow the best heating technique to be used for each type of heat transmission means, also allowing the reconversion of existing chafing dishes.

According to the invention, this object is achieved by a chafing dish according to claim 1.

Other features are comprised in the dependent claims.

The features and advantages of the present invention will be more apparent from the following description, which is to be understood as exemplifying and not limiting, with reference to the appended schematic drawings, wherein:
Figure 1 is an exploded perspective view of the chafing dish comprising a cover, a heat conductor plate and a food tray according to the present invention;
Figure 2 is a section view of the chafing dish of Figure 1 in a bain-marie operating configuration;
Figure 3 is a section view of the chafing dish of Figure 1 in a low humidity operating configuration;
Figure 4 is a section view of the chafing dish of Figure 1 in a dry operating configuration;
Figure 5 is a section view of the chafing dish of Figure 1 comprising an alternative heat conductor plate.

With reference to the aforesaid figures, a chafing dish 100 of the type comprising a water pan 110 adapted to contain water, a closing cover 120, a food tray 10 and a heat conductor plate 20 are shown.

The water pan 110 comprises an open upper base 112 inside which at least in part the food tray 10 can be inserted.

The water pan 110 is a container that comprises a bottom 111 adapted to be coupled with a heat source 200 and a perimeter wall 113 extending from the bottom 111 to the open upper base 112 of the water pan 110.

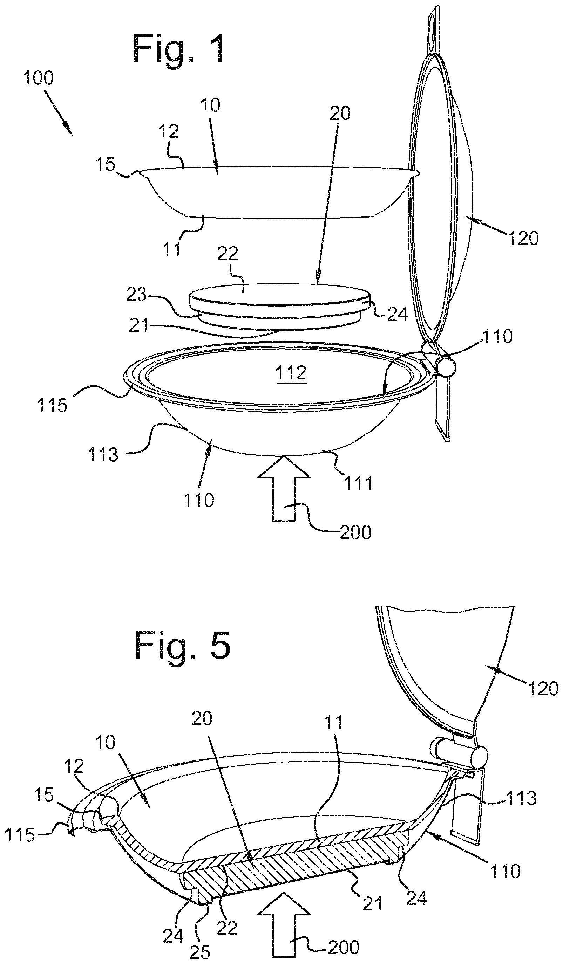

Figure 1 shows a chafing dish 100 in which the perimeter wall 113 of the water pan 110 comprises an inner concave surface and which together with the bottom 111 are adapted to contain water.

The bottom 111 of the water pan 110 has a smaller dimension than the open upper base 112 of the water pan 110.

The bottom 111 of the water pan 110 is closed.

In particular, as shown by way of example in the figures, considering that the bottom 111 can be of a substantially circular or elliptical geometric shape as shown in the figures and that therefore its dimension can be described through a geometric diameter, it follows that the geometric diameter of the bottom 111 is smaller than a geometric diameter of the open upper base 112 of the water pan 110, which is also of a substantially circular or elliptical shape. Other forms of the water pan 110 and the plate 20 are possible.

The closing cover 120 is adapted to close the open upper base 112 of the water pan 110. The closing cover 120 is necessary to keep foods warm in the food tray 10.

The food tray 10 is separably mountable with the water pan 110.

The food tray 10 comprises a bottom 11. The bottom 11 of the food tray 10 is closed.

The tray 10 comprises an upper base 12 comprising a flange 15, where the flange 15 rests on an edge 115 of the open upper base 112 of the water pan 110 so that the bottom 11 of the tray 10 is not in contact with the bottom 111 of the water pan 110 and a space 116 is left between the bottom 11 of the tray 10 and the bottom 111 of the water pan 110.

The plate 20 is separably mountable in the space 116 defined inside the water pan 110 and comprised between the bottom 111 of the water pan 110 and the bottom 11 of the food tray 10, in direct contact with them to achieve a heat transmission by contact conduction aimed at heating the food and keeping it warm.

The plate 20 comprises a lower base 21 adapted to rest on the bottom 111 of the water pan 110, an upper base 22 adapted to be placed in contact with the bottom 11 of the food tray 10, a perimeter wall 23 extending towards the open upper base 112 of the water pan 110 starting from the lower base 21 and ending up at the upper base 22 of the plate 20.

The upper base 22 of the heat conductor plate 20 comprises an upper surface which is adapted to be completely in contact with the lower surface of the bottom 11 of the food tray 10 so as to advantageously transmit the heat by direct contact to the food tray 10 with greater efficiency and effectiveness.

The plate 20 is entirely made of heat conductor material. In particular, the plate is made of a material with heat conduction and accumulation capacity such as for example an aluminium alloy.

The heat conductor plate 20 is heated by an outer heat source 200 which is positioned under the bottom 111 of the water pan 110 of the chafing dish 100. Advantageously, the lower base 21 of the heat conductor plate 20 comprises a lower surface which is entirely in contact with the upper inner surface of the bottom 111 of the water pan 110, so as to have a surface area as large as possible in contact with the bottom 111 of the water pan 110 which is heated by the external heat source 200.

The external heat source 200 is comprised in a list comprising for example a heating plate comprising electric resistors, a heat induction plate, burners fed by fuel gel.

In particular, as shown in Figures 1, 3 and 4, the perimeter wall 23 of the plate 20 is a vertical wall.

The perimeter wall 23 of the plate 20 is separated by a space 114 from the perimeter wall 113 of the water pan 110 when the plate 20 is positioned in the space 116.

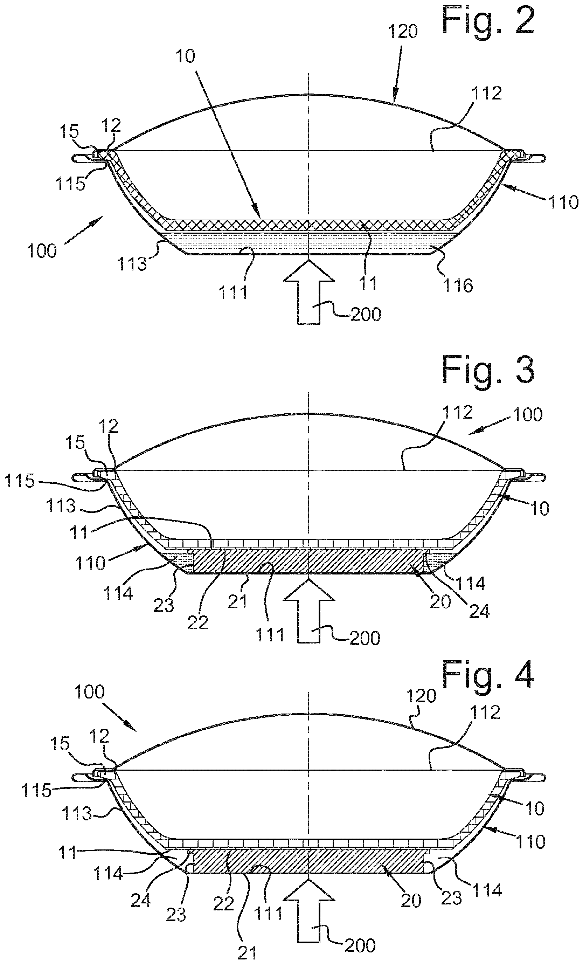

The space 114 shown in Figures 4-5 is an annular space around the plate 20.

As shown in particular in Figures 4 and 5, the bottom 11 of the tray 10 rests entirely on the upper surface of the upper base 22 of the plate 20.

In the embodiment shown, the upper base 22 of the plate 20 has a greater dimension than the lower base 21 of the plate 20 to ensure that a larger surface of the upper base 22 of the plate 20 can be in contact with the bottom 11 of the tray 10 to heat in a more advantageously efficient way the foods contained therein.

As shown in particular in Figures 1, 4 and 5, the plate 20 has the shape of two superimposed cylinders, where the lower cylinder comprises the lower base 21 and the perimeter wall 23, whereas the upper cylinder is the upper base 22. The upper base 22 and the lower base 21 being of different diameter, form a step 24.

This step 24 is useful as a reference for the level of the water line for inserting water in the space 114 of the water pan 110 for a low humidity operation of the chafing dish 100.

The step 24 can also be provided for different shapes of the plate 20 and the water pan 110.

The profile of the plate 20 is configured to optimize the occupation of the space 116 and to optimize the capacity of the space 114 so that it can contain water.

The plate 20 cooperates synergistically with the rest of the chafing dish 100 to ensure that the upper base 22 of the plate 20 is in contact with the bottom 11 of the chafing dish 10 and that the lower base 21 of the plate 20 is in contact with the bottom 111 of the water pan 110.

Furthermore, the plate 20 cooperates synergistically with the rest of the chafing dish 100 to ensure that the perimeter wall 23 of the heat conductor plate 20 and the perimeter wall 113 of the water pan 110 are such as to maintain the space 114 between the perimeter walls 23 and 113 so that the space 114 is adapted to contain the water.

More generally, the shape and the dimensions of the plate 20 follow the shape and the dimensions of the water pan 110 to ensure that the plate 20 fills the space 116 and that the space 114 between the perimeter wall 23 of the plate 20 and the wall 113 of the water pan 110 is provided.

As far as the operation is concerned, Figure 2 shows a configuration of the chafing dish 100 for a "bain-marie" operation, that is an operation with a high percentage of humidity. This "bain-marie" operating configuration does not involve the use of the heat conductor plate 20. The space 114 containing the water takes up the whole space 116 by widening which is the volume adapted to contain the plate 20. The external heat source 200 is positioned under the bottom 111 of the water pan 110 and heats the water contained in the space 116 and in the space 114, which is responsible for the transfer of heat to the food tray 10.

Figure 3 shows a configuration of the chafing dish 100 for the low humidity operation, that is an operation with a low percentage of humidity. This low humidity operating configuration provides for the heat conductor plate 20 to be positioned in the space 116 between the bottom 11 of the food tray 10 and the bottom 111 of the water pan 110. The space 116 of the water pan 110 is entirely filled by the heat conductor plate 20. In the space 114 an amount of water is poured according to the degree of humidity desired for the operation. An external heat source 200 heats the bottom 111 of the water pan 110 transmitting the heat both to the water present in the space 114 between the perimeter walls 23 of the plate 20 and the perimeter walls 113 of the water pan 110 and to the plate 20. The plate 20 directly transmits heat by contact from its upper base 22 to the bottom 11 of the food tray 10, heating and keeping the foods contained therein warm.

Figure 4 shows a configuration of the chafing dish 100 for dry operation, that is an operation without humidity. This dry operation configuration provides that there is no water in the space 114 and that the plate 20 transmits heat directly by contact to the bottom 11 of the food tray 10. The plate 20 is heated by an external heat source 200 as described above for the low humidity operation configuration.

Advantageously, the chafing dish 100 according to the present invention operates both for a "bain-marie" operation, for an operation at low humidity and for a dry operation.

The plate 20 is conformed so as to be placed in the space 116 between the bottom 11 of the tray 10 and the bottom 111 of the water pan 110 and entirely fill both the space 116 and the space 114. This alternative provides that the chafing dish can be operated in a "bain-marie" configuration without the insertion of the plate 20 and alternatively be dry operated with the insertion of the plate 20. In this alternative, since the space 114 is filled by the plate 20, it is not possible to operate the chafing dish 100 in the low humidity operation configuration.

Alternatively, it is not necessary for the bottom 111 of the water pan 110 to have a different dimension with respect to the open upper base 112 of the water pan 110, for example the perimeter walls 113 of the water pan 110 could also be vertical. It is sufficient for the perimeter walls 113 of the water pan 110 and the perimeter walls 23 of the heat conductor plate 20 to form the space 114 sufficient for the water to be contained therein.

Alternatively, it is possible to provide for an outer surface of the perimeter wall 113 of the water pan 110 to have a geometric shape different from the concave inner surface of the perimeter wall 113 and the perimeter wall 23 of the plate 20 to have a geometric shape which allows providing for the space 114 for the water containment.

Still alternatively, it is possible to provide that the inner surface of the perimeter wall 113 of the water pan 110 can have any shape adapted to contain water, such as for example a bowl shape or a shape with a rectangular section where the perimeter walls 113 are vertical or with a polygonal section.

Alternatively, the perimeter wall 23 of the plate 20 extends upwards, reducing its radial dimensions so that the lower base 21 has smaller dimensions than the upper base 22 of the plate 20.

Alternatively, the perimeter wall 23 of the plate 20 extends upwards, widening its radial dimensions so that the lower base 21 has greater dimensions than the upper base 22 of the plate 20.

Alternatively, it is provided that the perimeter wall 23 of the plate 20 can be enlarged or narrowed according to a linear profile, or according to a concave profile or according to a convex profile and that the perimeter wall 113 of the water pan 110 can be enlarged or narrowed according to a linear profile or according to a concave profile or according to a convex profile, so that between the perimeter wall 113 of the water pan 110 and the perimeter wall 23 of the heat conductor plate 20, the space 114 is still maintained to contain water.

A further alternative provides that it is possible to insert a plate 20 of any shape, provided that the upper base 22 of the plate 20 is in contact with the bottom 11 of the food tray 10 and that the perimeter wall 23 of the plate 20 is spaced apart by the space 114 from the perimeter wall 113 of the water pan 110 so that water can be contained in the space 114.

Alternatively, as shown in Figure 5, the heat conductor plate 20 comprises feet 25. The heat conductor plate 20 of Figure 5 comprises a lower base 21 with a circular geometrical shape and the feet 25 form a geometric ring which extends from the lower base 21 of the heat conductor plate 20 towards the bottom 111 of the water pan 110. In particular, as shown in Figure 5, the feet 25 form a ring near the perimeter of the lower base 21 of the heat conductor plate 20 extending the perimeter wall 23 of the plate 20 towards the bottom 111 of the water pan 100. In the alternative shown in Figure 5 it is provided that the bottom 111 of the water pan 110 can follow the profile of the feet 25 and of the bottom 21 of the heat conductor plate 20.

Still alternatively, it is possible to provide for the upper surface of the bottom 111 of the water pan 110 to have a slight roundness, that is the upper surface of the bottom 111 of the water pan 110 to be convex. This shape is particularly effective for reinforcing the bottom 111 and stabilising the shape of the bottom 111 during the heating phase. In this yet another alternative it is provided for the lower base 21 of the plate 20 to have a complementary shape with the bottom 111 of the water pan 110, that is the lower surface of the lower base 21 of the plate 20 to be concave.

The invention thus conceived is susceptible to many modifications and variants, insofar as they are encompassed by the appended claims. In practice, the materials used, as well as the dimensions and the shapes, can be of any type according to the technical requirements.

## Claims

1. Chafing dish (100) of the type comprising
a water pan (110) adapted to contain water, wherein said water pan (110) comprises an open upper base (112), a bottom (111) adapted to be coupled with a heat source (200),
a closing cover (120) adapted to close said open upper base (112) of said water pan (110),
a food tray (10) separably mountable with said water pan (110), wherein said food tray (10) comprises a bottom (11),
**characterized in that** said chafing dish (100) comprises
a heat conductor plate (20) separably mountable inside a space (116) of said chafing dish (100) provided between said water pan (110) and said food tray (10), wherein said plate (20) comprises a lower base (21) adapted to lean on said bottom (111) of said water pan (110), an upper base (22) adapted to be placed in contact with said bottom (11) of said food tray (10), a perimeter wall (23) extending towards said open upper base (112) of said water pan (110) from the lower base (21) to the upper base (22) of said plate (20).

2. Chafing dish (100) according to claim 1, **characterized in that** said perimeter wall (23) of said heat conductor plate (20) is separated from a perimeter wall (113) of said water pan (110) by a space (114), wherein said perimeter wall (113) of said water pan (110) extends from the bottom (111) to the open upper base (112) of said water pan (110), wherein said space (114) is adapted to contain said water.

3. Chafing dish (100) according to any one of the claims 1 or 2, **characterized in that** said upper base (22) of said heat conductor plate (20) comprises an upper surface which is adapted to be completely in contact with a lower surface of said bottom (11) of said food tray (10) and/or **in that** said lower base (21) of said heat conductor plate (20) comprises a lower surface which is completely in contact with an upper inner surface of said bottom (111) of said water pan (110).

4. Chafing dish according to any one of the claims 1-3, **characterized in that** said heat conductor plate (20) is entirely made of heat conductor material, preferably of aluminium alloy.

5. Chafing dish (100) according to any one of the claims 1-4, **characterized in that** said perimeter wall (113) of said water pan (110) has a profile comprised in a list comprising a linear profile, a concave profile, a convex profile and **in that** said perimeter wall (23) of said heat conductor plate (20) has a profile comprised in a list comprising a linear profile, a concave profile, a convex profile.

## Patentansprüche

1. Warmhaltevorrichtung (100) vom Typ umfassend eine Wasserpfanne (110), die ausgelegt ist, um Wasser zu enthalten, wobei die Wasserpfanne (110) eine offene obere Basis (112), einen Boden (111) umfasst, der ausgelegt ist, mit einer Wärmequelle (200) verbunden zu werden,
eine Verschlussabdeckung (120), die ausgelegt ist, um die offene obere Basis (112) der Wasserpfanne (110) zu schließen,
eine Nahrungsmittelschale (10), die mit der Wasserpfanne (110) trennbar montierbar ist, wobei die Nahrungsmittelschale (10) einen Boden (11) umfasst, **dadurch gekennzeichnet, dass** die Warmhaltevorrichtung (100) Folgendes umfasst
eine wärmeleitende Platte (20), die trennbar innerhalb eines Raums (116) der Warmhaltevorrichtung (100), der zwischen der Wasserpfanne (110) und der Nahrungsmittelschale (10) bereitgestellt ist, montierbar ist, wobei die Platte (20) eine untere Basis (21), die zum Anlehnen an den Boden (111) der Wasserpfanne (110) ausgelegt ist, eine obere Basis (22), die ausgelegt ist, um mit dem Boden (11) der Nahrungsmittelschale (10) in Kontakt gebracht zu werden, eine Umfangswand (23), die sich in Richtung der offenen oberen Basis (112) der Wasserpfanne (110) von der unteren Basis (21) zur oberen Basis (22) der Platte (20) erstreckt, umfasst.

2. Warmhaltevorrichtung (100) nach Anspruch 1, **dadurch gekennzeichnet, dass** die Umfangswand (23) der Wärmeleitplatte (20) von einer Umfangswand (113) der Wasserpfanne (110) durch einen Raum (114) getrennt ist, wobei sich die Umfangswand (113) der Wasserpfanne (110) vom Boden (111) zu der offenen oberen Basis (112) der Wasserpfanne (110) erstreckt, wobei der Raum (114) ausgelegt ist, um das Wasser zu enthalten.

3. Warmhaltevorrichtung (100) nach einem der Ansprüche 1 oder 2, **dadurch gekennzeichnet, dass** die obere Basis (22) der wärmeleitenden Platte (20) eine obere Fläche umfasst, die ausgelegt ist, um vollständig mit einer unteren Fläche des Bodens (11) der Nahrungsmittelschale (10) in Kontakt zu stehen und/oder dadurch, dass die untere Basis (21) der wärmeleitenden Platte (20) eine untere Fläche umfasst, die vollständig mit einer oberen Innenfläche des Bodens (111) der Wasserpfanne (110) in Kontakt steht.

4. Warmhaltevorrichtung nach einem der Ansprüche 1-3, **dadurch gekennzeichnet, dass** die wärmeleitende Platte (20) vollständig aus wärmeleitendem Material besteht, vorzugsweise aus einer Aluminiumlegierung.

5. Warmhaltevorrichtung (100) nach einem der Ansprüche 1-4, **dadurch gekennzeichnet, dass** die Umfangswand (113) der Wasserpfanne (110) ein Profil aufweist, das in einer Leiste enthalten ist, die ein lineares Profil, ein konkaves Profil, ein konvexes Profil umfasst und dadurch, dass die Umfangswand (23) der wärmeleitenden Platte (20) ein Profil aufweist, das in einer Leiste enthalten ist, die ein lineares Profil, ein konkaves Profil, ein konvexes Profil umfasst.

## Revendications

1. Chauffe-plats (100) du type comprenant un récipient à eau (110) adapté pour contenir de l'eau, dans lequel ledit récipient à eau (110) comprend une base supérieure ouverte (112), un fond (111) adapté pour être couplé à une source de chaleur (200) ;
un couvercle (120) adapté pour fermer ladite base supérieure ouverte (112) dudit récipient à eau (110) ; un plateau à aliments (10) pouvant être monté de manière séparable sur le récipient à eau (110), dans lequel le plateau à aliments (10) comprend un fond (11) ;
**caractérisé en ce que** ledit chauffe-plats (100) comprend
une assiette thermoconductrice (20) pouvant être montée de manière séparable à l'intérieur d'un espace (116) dudit chauffe-plats (100) entre ledit récipient à eau (110) et ledit plateau à aliments (10), dans laquelle ladite assiette (20) comprend une base inférieure (21) adaptée pour s'appuyer sur ledit fond (111) dudit récipient à eau (110), une base supérieure (22) adaptée pour être placée en contact avec ledit fond (11) dudit plateau à aliments (10), une paroi périphérique (23) s'étendant vers ladite base supérieure ouverte (112) dudit récipient à eau (110) de la base inférieure (21) jusqu'à la base supérieure (22) de ladite assiette (20).

2. Chauffe-plats (100) selon la revendication 1, **caractérisé en ce que** ladite paroi périphérique (23) de ladite assiette thermoconductrice (20) est séparée d'une paroi périphérique (113) dudit récipient à eau (110) par un espace (114), dans lequel ladite paroi périphérique (113) dudit récipient à eau (110) s'étend du fond (111) à la base supérieure ouverte (112) dudit récipient à eau (110), dans lequel ledit espace (114) est adapté pour contenir ladite eau.

3. Chauffe-plats (100) selon l'une quelconque des revendications 1 ou 2, **caractérisé en ce que** ladite base supérieure (22) de ladite assiette thermoconductrice (20) comprend une surface supérieure qui est adaptée pour être complètement en contact avec une surface inférieure dudit fond (11) dudit plateau à aliments (10) et/ou **en ce que** ladite base inférieure (21) de ladite assiette thermoconductrice (20) comprend une surface inférieure qui est complètement en contact avec une surface interne supérieure dudit fond (111) dudit récipient à eau (110).

4. Chauffe-plats selon l'une quelconque des revendications 1 à 3, **caractérisé en ce que** ladite assiette thermoconductrice (20) est entièrement faite en matériau thermoconducteur, de préférence en alliage d'aluminium.

5. Chauffe-plats (100) selon l'une quelconque des revendications 1 à 4, **caractérisé en ce que** ladite paroi périphérique (113) dudit récipient à eau (110) a un profil compris dans une liste comprenant un profil linéaire, un profil concave, un profil convexe et **en ce que** ladite paroi périphérique (23) de ladite assiette thermoconductrice (20) a un profil compris dans une liste comprenant un profil linéaire, un profil concave, un profil convexe.
